# DEMANDE DE BREVET EUROPEEN

(11) **EP 1 122 942 A1**
(43) Date de publication de la demande: **08.08.2001**
(21) Numéro de dépôt: 01400269.5
(22) Date de dépôt: 02.02.2001
(51) Int. Cl.: H04N 1/00

(54) **Procédé d'édition d'un courrier électronique par un appareil de télécopie**

(30) Priorité: 02.02.2000 FR 0001291
(71) Demandeur: SAGEM SA, 75116 Paris (FR)
(72) Inventeur: Seux, Emmanuel, 95800 Cergy le Haut (FR)
(74) Mandataire: Bloch, Gérard

(57) **Abrégé**

Selon le procédé d'édition par un appareil de télécopie (1) d'un courrier électronique adressé à celui-ci et contenant une spécification du format du courrier, on lit la spécification de format, on détermine si l'appareil de télécopie (1) peut traiter le courrier selon ce format, dans la négative, on transmet le courrier électronique à un serveur (3) de conversion de format, le serveur (3) convertit le format du courrier en un format adapté à l'appareil de télécopie (1) et l'envoie à l'appareil de télécopie (1) et l'appareil de télécopie (1) édite le courrier.

## Description

La présente invention concerne les appareils de réception de courrier électronique transmis par un réseau informatique du type de l'Internet.

L'Internet permet l'échange de courrier électronique entre ordinateurs personnels (PC). Compte tenu de l'étendue mondiale de l'Internet, un grand nombre d'alphabets est prévu pour ces courriers électroniques. Outre l'alphabet occidental, on peut par exemple citer les alphabets arabe, chinois et hébreu.

Pour l'édition du courrier, par un écran ou une imprimante, la norme MIME prévoit, en tête du courrier, un champ de données qui spécifie l'alphabet utilisé. Un PC qui reçoit le courrier dispose de tables de transcodage spécifiant chacune, pour chaque mot de code représentant un caractère de l'alphabet considéré, la forme du caractère et donc le motif de pixels à éditer. L'en-tête commande donc le PC pour l'édition du courrier.

Par ailleurs, les télécopies ont un format à base de pixels incompatible avec le format à base de caractère du courrier de l'Internet. Pour cependant les transmettre sur l'Internet, on les encapsule sous forme de pièce jointe dans un courrier électronique et l'Internet les transmet en transparence, sans en analyser le format.

Les télécopieurs évolués sont donc capables de recevoir des messages au format du courrier électronique, pour en extraire les télécopies, ayant un format classique de présentation des données par pixels (bitmap). Certains même peuvent aussi, tout comme un PC et indépendamment des télécopies, éditer du texte transmis de façon classique dans le courrier.

Cependant, les télécopieurs ont une capacité mémoire limitée par rapport à celle d'un PC et il est donc exclu d'y stocker toutes les tables de spécification des divers alphabets.

D'une façon générale, un télécopieur est susceptible de recevoir des courriers de format incompatible avec ses capacités d'édition, cette incompatibilité étant due à l'alphabet ou simplement au fait qu'il existe, indépendamment de l'alphabet, un choix de plusieurs formats pour les champs de données du courrier.

Par télécopieur, on entend aussi bien les télécopieurs classiques que les appareils permettant de télécopier, tels que les ordinateurs personnels dotés de moyens de télécopie, qu'on désignera globalement par "appareils de télécopie".

La présente invention vise à éviter cette limitation de l'aptitude des appareils de télécopie à éditer le courrier électronique.

A cet effet, l'invention concerne un procédé d'édition par un appareil de télécopie d'un courrier électronique adressé à celui-ci et contenant une spécification du format du courrier, procédé dans lequel :
- on lit la spécification de format,
- on détermine si l'appareil de télécopie est apte à traiter le courrier selon le format considéré,
- dans la négative, on transmet le courrier électronique à un serveur de conversion de format,
- le serveur convertit le format du courrier en un format adapté à l'appareil de télécopie,
- le serveur envoie à l'appareil de télécopie le courrier à format converti et
- l'appareil de télécopie édite le courrier.

Ainsi, l'appareil de télécopie est universel pour l'édition de courrier et équivaut à un PC grâce au serveur, sans accroissement de capacité et de prix. Comme un tel serveur peut servir un grand nombre d'appareils de télécopies, le coût du serveur reste limité par rapport au service rendu.

Avantageusement, la spécification de format est lue dans une boîte à lettres de réception de l'appareil de télécopie, le courrier électronique est transmis au serveur depuis la boîte à lettres et renvoyé converti à celle-ci, et l'appareil de télécopie ne relève le courrier de sa boîte à lettres qu'après réception du courrier converti.

On évite ainsi une transmission inutile, à l'appareil de télécopie, d'un courrier de format inadapté.

L'invention sera mieux comprise à l'aide de la description suivante d'un mode préféré de mise en oeuvre du procédé de l'invention, en référence au dessin annexé, sur lequel :
- la figure 1 représente schématiquement un réseau de transmission de courrier électronique auquel sont reliés un appareil de télécopie, ici un télécopieur, et un serveur de conversion de format de courrier, et
- la figure 2 représente le format d'un courrier électronique.

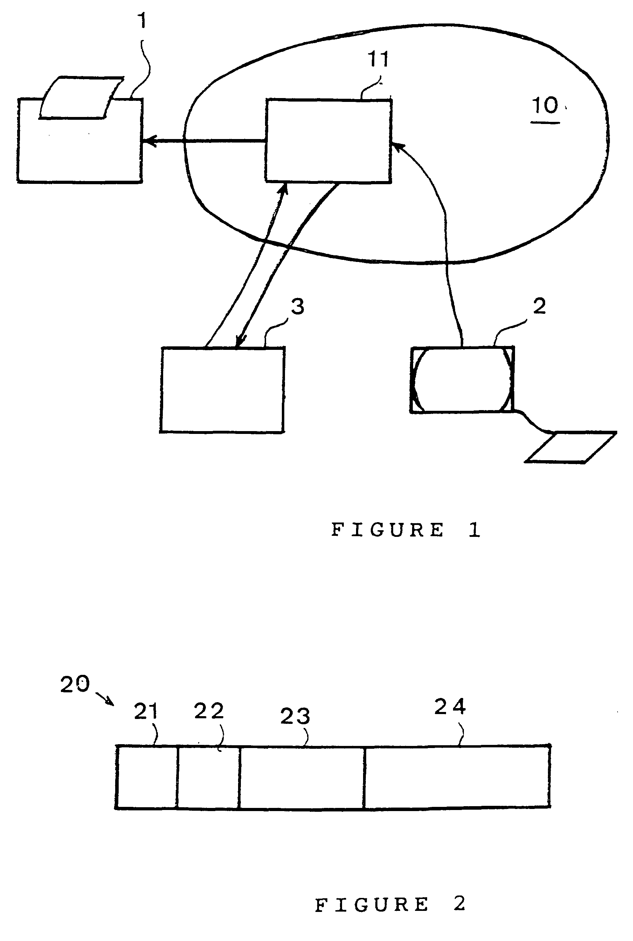

La référence 1 de la figure 1 désigne un appareil de télécopie, ici un télécopieur, relié à un réseau 10 de transmission de courrier électronique, ici le réseau de l'Internet. Au réseau 10 sont en outre reliés un serveur 3 de conversion de format de courrier électronique et des ordinateurs personnels (PC), comme celui référencé 2, aptes à émettre (fig. 2) des courriers électroniques 20 au format de l'Internet. Dans ce format, il est prévu, outre un champ 23 de partie utile de courrier, un champ associé de commande 22 qui spécifie l'alphabet utilisé pour le courrier c'est-à-dire la correspondance entre des mots de code transmis dans le champ 23 et la représentation des caractères correspondants d'un alphabet. Un champ 21 contient des données de service pour la transmission du courrier et un champ optionnel 24 est réservé à des données appelées pièce jointe. Les pièces jointes ont un format indépendant de celui du courrier électronique et peuvent donc représenter un autre type d'information, par exemple une télécopie, ou une information du type du courrier dans un format quelconque. Comme alphabet utilisable pour coder numériquement les caractères du courrier électronique, on peut par exemple citer la famille d'alphabets ou formats ASCII, qui comportent 127 ou 255 mots de code définissant entre autres les lettres et chiffres de l'alphabet occidental ainsi que les caractères de ponctuation et d'opération. Les normes ISO-8859 x (x : variable) et Unicode ISO-10646 définissent de même des alphabets ou jeux de caractères.

Le télécopieur 1 dispose dans cet exemple d'une boîte à lettres 11 située ici chez un fournisseur d'accès à l'Internet 10. Les PC 2 sont de même reliés à l'Internet 10 par des fournisseurs d'accès, non représentés.

La mise en oeuvre du procédé de l'invention va maintenant être expliquée.

Le PC 2 émet un courrier électronique qu'il adresse, par l'Internet 10, au télécopieur 1 et qui est donc mémorisé dans sa boîte à lettres 11. Le champ utile 23 de ce courrier comporte des caractères de texte qui sont codés selon un alphabet spécifié dans le champ associé 22, par exemple ici le chinois.

Bien que le télécopieur 1 soit apte, dans cet exemple, à traiter un alphabet, ici l'ASCII, il ne comporte pas en mémoire l'alphabet chinois et ne peut donc éditer les caractères du courrier.

L'édition du courrier en chinois provenant du PC 2 met alors en oeuvre les étapes suivantes :
- depuis le télécopieur 1, est lue la spécification de format dans le champ 22,
- il est déterminé, dans le télécopieur 1, si celui-ci est apte à traiter le courrier du champ 23 selon le format (22) considéré,
- dans la négative, ce qui est le cas ici, le champ de courrier électronique 23 est transmis au serveur 3 de conversion de format,
- le serveur 3 convertit le format du courrier du champ 23 en un format adapté au télécopieur 1,
- le serveur 3 envoie au télécopieur 1 le courrier à format converti et
- le télécopieur 1 édite le courrier.

La détermination de l'aptitude du télécopieur 1 à traiter le courrier au format considéré (chinois) est effectuée par comparaison de la spécification lue dans le champ 22 à une table du télécopieur 1 contenant la liste des formats de courrier qu'il peut traiter, ici l'ASCII.

Dans cet exemple, le serveur 3 convertit le courrier en un courrier à format image (TIF ou TIFF-F), ou carte de pixels (bitmap), exploitable par tout télécopieur. Comme ce format image est incompatible avec le format du courrier électronique que peut transmettre l'Internet 10, le serveur 3 élabore un nouveau courrier 20, dans lequel les données utiles du champ 23 du courrier à convertir ont été encapsulées, après conversion, dans le champ 24 de pièce jointe. Le champ 24 du courrier 20 initial contenait éventuellement une télécopie associée au courrier du champ 23 si bien que, dans le nouveau courrier 20 converti, le texte du courrier et la télécopie se trouvent tous deux en pièce jointe 24.

En variante, le nouveau format du courrier converti est lui aussi de type à codage par caractères. Le serveur 3 fournit en retour celui-ci au format ASCII par exemple ou plus précisément à l'un des formats ASCII existants, adapté au télécopieur 1, l'adressage en retour étant commandé par les données de service (adresse) du champ 21, transmises avec le courrier à convertir. Dans ce cas, le mode de codage, par caractères, étant compatible avec l'Internet 10, le passage du courrier converti dans le champ de pièce jointe 24 n'est qu'optionnel.

La spécification du nouveau format de courrier, dans le courrier que renvoie le serveur 3, est optionnelle puisque le télécopieur 1 peut détecter, d'après les données de service, qu'il s'agit d'un courrier en retour du serveur 3, courrier dont le télécopieur 1 a initialement commandé l'émission de la boîte à lettres 11 vers le serveur 3, dont le format de conversion est connu et immuable.

Il peut être prévu que le serveur 3 comporte une table de personnalisation, comportant une liste de télécopieurs 1 et d'alphabets associés, ou autres formats adaptés de présentation du courrier, spécifiques à chacun. Le serveur 3 identifie, d'après les données de service, le télécopieur qui lui transmet un courrier à convertir et consulte la table afin de sélectionner un format de conversion correspondant, adapté au télécopieur considéré, pour fournir ainsi en retour un courrier de format personnalisé.

Dans cet exemple, le courrier électronique est transmis au serveur 3 depuis la boîte à lettres 11 et renvoyé converti à celle-ci, et le télécopieur 1 ne relève le courrier de sa boîte à lettres 11 qu'après réception du courrier converti.

Ainsi, le télécopieur 1 consulte d'abord simplement le contenu de sa boîte à lettres 11 et ne la relève effectivement que lorsqu'il peut éditer le courrier qu'elle contient, ce qui évite un transfert inutile d'un courrier inexploitable entre la boîte à lettre 11 et le télécopieur 1.

Que la boîte à lettres 11 soit comme ici prévue ou qu'elle soit omise, la transmission du courrier au serveur 3 peut s'effectuer sous la forme du courrier 20 dans sa totalité, avec un champ éventuel 24 de pièce jointe de télécopie, ou bien uniquement de sa partie courrier 22, 23, avec les données de service du champ 21 pour l'adressage en retour.

En variante, du fait que le télécopieur 1 est aussi, dans cet exemple, apte à recevoir directement certains messages de courrier électronique, c'est-à-dire à lire le champ 23 lorsqu'il s'agit de l'alphabet ASCII dont il dispose localement, le serveur 3 renvoie au télécopieur 1 le courrier 23 converti sous la forme d'un message 20 comportant les champs 21 à 23 au format du courrier électronique considéré, ici ASCII, c'est-à-dire que le texte du courrier converti reste dans le champ 23.

## Revendications

1. Procédé d'édition par un appareil de télécopie (1) d'un courrier électronique adressé à celui-ci et contenant une spécification (22) du format du courrier (23), procédé dans lequel :
- on lit la spécification de format (22),
- on détermine si l'appareil de télécopie (1) est apte à traiter le courrier (23) selon le format considéré,
- dans la négative, on transmet le courrier électronique (23) à un serveur (3) de conversion de format,
- le serveur (3) convertit le format du courrier (23) en un format adapté à l'appareil de télécopie (1),
- le serveur (3) envoie à l'appareil de télécopie (1) le courrier (23) à format converti et
- l'appareil de télécopie (1) édite le courrier (23).

2. Procédé selon la revendication 1, dans lequel
- la spécification de format est lue dans une boîte à lettres (11) de réception de l'appareil de télécopie (1),
- le courrier électronique (23) est transmis au serveur (3) depuis la boîte à lettres (11) et renvoyé converti à celle-ci, et
- l'appareil de télécopie (1) ne relève le courrier de sa boîte à lettres (11) qu'après réception du courrier converti.

3. Procédé selon l'une des revendications 1 et 2, dans lequel le serveur (3) encapsule le courrier converti (23) dans un champ de pièce jointe (24) d'un message (20) qu'il envoie à l'appareil de télécopie (1).

4. Procédé selon la revendication 3, dans lequel le serveur (3) convertit le courrier (23) selon un format (TIFF-F) de représentation par pixels.
